# EUROPEAN PATENT SPECIFICATION

(11) **EP 1 014 740 B1**
(45) Date of publication and mention of the grant of the patent: **26.07.2006**
(21) Application number: 98403252.4
(22) Date of filing: 22.12.1998
(51) Int. Cl.: H04Q 7/36

(54) **Reduction of co-channel interference in cellular communications systems**
Verringerung von Gleichkanalinterferrenz in einem zellularen Kommunikationssystem
Réduction d'interférences cocanaux dans un système de communication cellulaire

(43) Date of publication of application: 28.06.2000
(73) Proprietor: MOTOROLA, INC., Schaumburg, IL 60196 (US)
(72) Inventor: Boscovic, Dragan, 78100 Saint-Germain-en-Laye (FR); Martinez, Georges, 14000 Caen (FR); Sartori, Philippe, 28000 Chartres (FR)
(74) Representative: Jepsen, René Pihl

(56) References cited:
- EP-A- 0 591 770
- WO-A-93/10601

## Description

This invention relates to cellular communications systems and particularly to those systems having at least one base station communicating with at least one remote unit.

In a cellular communications system, a plurality of base stations provides a radio telecommunications service to a plurality of remote mobile subscriber units. Each base station defines a particular geographical area for "cell" proximate to the base station to produce coverage areas. The communications link from the base station to a mobile subscriber unit is referred to as the downlink. Conversely, the communications link from a mobile subscriber unit to the base station is referred to as the uplink.

Multiple access techniques permit the simultaneous transmissions from several mobile subscriber units to a single base station.

One type of multiple access technique known as code division multiple access (CDMA), employs spread spectrum signaling. Individual users in the CDMA communications network use the same RF carrier frequency, but are separated by the use of individual spreading codes. Hence, multiple communications channels are allocated using a plurality of spreading codes within the portion of radio spectrum, each code being uniquely assigned to a mobile subscriber unit.

Another type of multiple access technique is the time division multiple access (TDMA) technique. Further schemes involve combinations of both TDMA and CDMA.

In a TDMA system, a communications channel consists of a time slot in a periodic train of time intervals over the same frequency. Each period of time slots is called a frame. A given signal's energy is confined to one of these time slots. An example of a communications system using this approach is the global system for mobile communications (GSM) in which a time frame is divided into eight different time slots. Each remote subscriber unit is allocated one specific time slot for communication with the base station in this repeating time frame.

In the GSM system, one carrier frequency is allocated for communication from the base station to the remote subscriber unit (downlink) and another carrier frequency is allocated for communication from the remote subscriber unit to the base station (uplink).

Other systems are known which use a method known as time division duplex (TDD) in which the same carrier frequency is used for both uplink and downlink. The repeating time frame is in this case divided into an interval with time slots used in the uplink direction and another interval with time slots used in the downlink direction.

In order to gain further increases in capacity within a geographic area, it is known to employ a technique called "sectorisation". Sectorisation splits a single cell into a number of sectors with each sector having transmit and receive antennas and behaving as an independent cell. Each sector usually uses special directional antennas to ensure that the radio propagation from one sector is concentrated in a particular direction. This has a number of advantages. Firstly, concentrating all the energy into a smaller area, for example 60°, 120°, 180° instead of 360°, results in a much stronger signal. Secondly, one can now use the same carrier frequencies in a much closer frequency re-use pattern, thus allowing the communications network to support more subscriber units. (Frequency re-use means the use of the same carrier frequency in different cells or cell sectors). The distribution of RF carriers and the size of the sectored cells, is selected to achieve a balance between avoiding co-channel interference by geographically separating cells using the same RF frequencies and achieving a channel density sufficient to satisfy the anticipated demand. (Co-channel interference occurs when the RF carriers of the same frequency are being transmitted in close proximity to each other).

Hence there is a trade off between co-channel interference and network capacity. Means for reducing co-channel in a sectored frequency re-use configuration are advantageous because an enhancement of overall network capacity will result.

One known means for reducing co-channel interference involves frequency hopping. Frequency hopping allows the network operator to use a set of frequencies during a call instead of only one, e.g. different time slots operate on different frequencies. However, the drawback with this solution is that it requires additional spectrum.

Another known means for reducing co-channel interference involves creating a micro-cell in those regions most likely to suffer from interference. However, this has the disadvantage of a higher infrastructure cost and the added processing complexity of effecting handovers from micro-cell to macro-cell and vice-versa.

A further proposed means for reducing co-channel interference involves trunk pool techniques. This comprises using narrow beam antennas in a single sector, thus reducing for the user, the probability of such interference. However, this still does not prevent the occurrence of "blind spots" (i.e. locations where a mobile subscriber unit is roughly of equal distance from two base stations operating on the same frequency, for example, at the corners of two cell sectors) especially in the wide-band TDMA/CDMA concept where a single user can have access to all the spreading codes available.

Document WO/93/10601 discloses a communication system with two sets of sectorised antennas mutually rotated.

The present invention aims to provide a means for reducing co-channel interference in sectored cells employing frequency re-use and having none of the aforementioned disadvantages.

Accordingly, the present invention consists of a communications system for a communications network which comprises a plurality of base stations each defining a cell of communications coverage and each cell being configured by division into a plurality of sectors for communication with at least one mobile subscriber unit over a communications link associated with each sector and having an RF carrier frequency assigned thereto, characterised in that the communications system includes means for changing, periodically, the configuration of each cell by rotation of the sectors comprising the cell.

One means for changing the configuration of a cell may be located at a base station or remotely therefrom and may operate to steer a plurality of directional antennas, each antenna being associated with a sector comprising the cell. A cell may be divided into any number of sectors.

The configuration may be changed every N pre-determined time periods. In the case of a communications link divided into time slots, the configuration may be changed every N time slots.

N may be equal to 1, in which case, a cell re-configuration occurs each pre-determined time period or slot. Alternatively, re-configuration may be arranged to occur every several time periods or slots.

The periodicity of cell re-configuration and any choice of the value of N may be set by the network operator and chosen to best optimise system performance.

In one example, re-configuration of the cell may be arranged to switch back and forth between alternate configurations on each time period or slot.

In an alternative example, re-configuration of a cell may be arranged so that there is an effective continuous rotation of the sectors on each time period or slot.

The re-configuration of the cells in accordance with the invention averages out co-channel interference suffered by mobile subscriber units located in blind spots. Further, as the co-channel interference is averaged over different locations in the network, then network capacity is more evenly distributed across each cell.

An embodiment of the invention will now be described by way of example only, with reference to the drawings of which;
Figure 1 is a schematic block diagram of a base station incorporating a communications system in accordance with the invention,
And Figures 2 and 3 are schematic diagrams illustrating 2 alternative cell sector configurations.

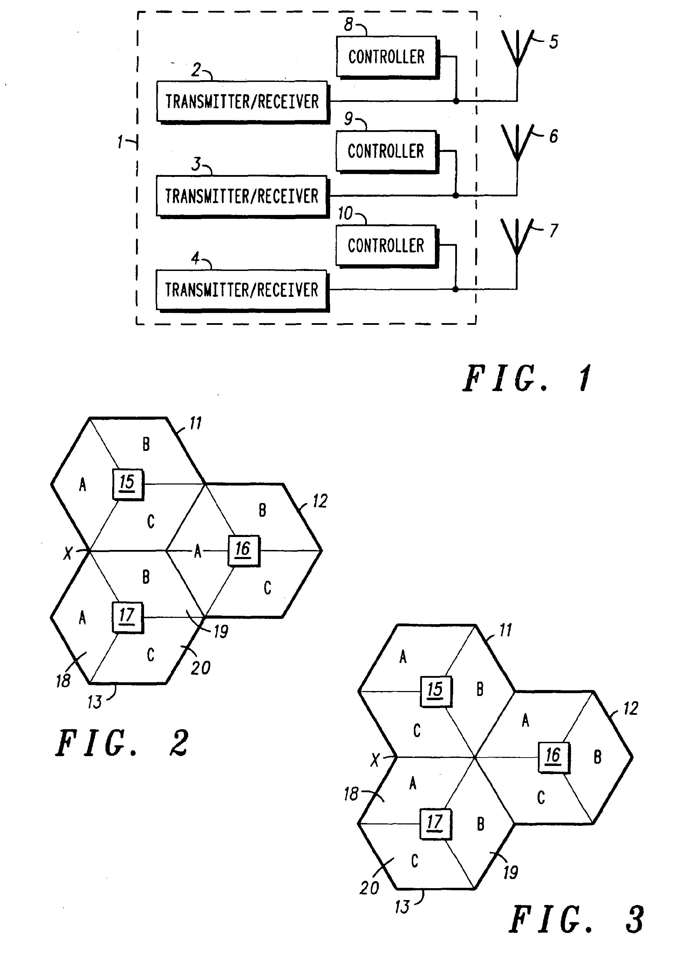

Figure1 shows one of several base stations 1 which are incorporated in a communications network which operates in a synchronised TDD mode. Each base station 1 comprises three transceivers 2, 3, 4, each connected to a directional and steerable antenna 5, 6, 7 for providing three sectored areas of coverage within the cell served by the base station 1. In the example, each transceiver 2, 3, 4 operates on one of three fixed frequencies and each steerable antenna 5, 6, 7 has associated with it a respective controller 8, 9, 10 for steering each antenna in order to give the desired coverage pattern within the cell. The controllers 8, 9, 10 can be pre-programmed with a sequence of antenna coverage patterns or alternatively, they can be under the control of a remote mobile switching centre (not shown).

In Figure 2 contiguous cells 11, 12, 13 are served by base stations 15, 16, 17 respectively, each base station being of the type described with reference to Figure 1. Each cell is split into three equal sectors 18, 19, 20 and carrier frequencies A, B and C are assigned thereto such that each cell supports all three frequencies simultaneously.

In the configuration of Figure 2 (sometimes referred to as a 1 x 3 re-use pattern deployment), suppose that a mobile subscriber unit is located at point X, at a point where cells 11 and 13 meet. Here, the mobile subscriber is equi-distant from the base station 15 and the base station 17 and just on the edge of two sectors, both operating on frequency A. Therefore, if a call is in progress via the base station 17, on time slot T1 say, signals from base station 15 also on frequency A will be an unwanted source of interference to the mobile subscriber unit located at X. This interference is reduced by, on time slot T2, rotating the sectors of all three cells (by the action of the controllers 8, 9, 10 of Figures 1) to the configuration shown in Figure 3.

In Figure 3, all sectors in each cell have been rotated clockwise through 60° (i.e. 360/2n where n is the number of sectors) so that for example, in cell 13 the sector 18 which operated on frequency A, is now in the geographical location that sector 19 found itself in on the previous time slot. Hence, on time slot T2, the mobile subscriber unit at point x is still able to communicate on frequency A with the base station 17 but is now out of range of frequency A being transmitted by base station 15.

In this example, on time slot T3, the controllers 8, 9, 10 force the antennas 5, 6, 7 to revert to the configuration of Figure 1. This process of switching between the two configurations of Figure 2 and Figure 3 on alternate time slots averages out the interference on frequency A from the base station 15.

In an alternative embodiment, the cells are rotated through 60° at a time on successive time slots. This can be advantageous depending upon system usage and its topography.

While the above embodiments have illustrated a case where a cell is divided into three 120° sectors, it is to be understood that a cell may be divided into any number of sectors, equal or otherwise. Further, the angle of rotation can be chosen to have any value, depending on network requirements.

## Claims

1. A communications system for a communication network which comprises a plurality of base stations (15, 16, 17), each defining a cell (11, 12, 13) of communications coverage and each cell being configured by division into a plurality of sectors (18, 19, 20) for communication with at least one mobile subscriber unit over a communications link associated with each sector (18, 19, 20) and having an RF carrier frequency (A, B, C) assigned thereto,
**characterised in that** the communications system includes means (8, 9, 10) for changing, periodically, the configuration of each cell (11, 12, 13) by rotation of the sectors (18, 19, 20) comprising the cell.

2. A communications system as claimed in Claim 1 in which the means for changing periodically the configuration of a cell (11) includes a controller (8) having an output which is used to steer a directional antenna (5), associated with each sector.

3. A communications system as claimed in either preceding Claim in which the configuration of each cell (11, 12, 13) is changed every N pre-determined time periods.

4. A communications system as claimed in Claim 3 where N = 1 and in which the controller (8) is adapted to switch back and forth between two alternate configurations on each time period.

5. A communications system as claimed in either of Claims 3 0r 4 in which the communications link is divided into time slots and in which said pre-determined time period comprises a time slot.

6. A communications system as claimed in any preceding Claim in which the controller (8) is adapted to change the cell configuration by rotation of the sectors through 360/2n degrees where n is the number of sectors per cell.

## Patentansprüche

1. Kommunikationssystem für ein Kommunikationsnetzwerk, das eine Mehrzahl von Basisstationen (15, 16, 17) umfasst, die jede eine Zelle (11, 12, 13) der Kommunikationsabdeckung definieren und wobei jede Zelle durch Teilung in eine Mehrzahl von Sektoren (18, 19, 20) konfiguriert ist, für eine Kommunikation mit zumindest einer mobilen Teilnehmereinheit über eine Kommunikationsverbindung, die jedem Sektor (18, 19, 20) zugeordnet ist und eine dieser zugewiesenen HF-Trägerfrequenz (A, B, C) aufweist,
**dadurch gekennzeichnet, dass** das Kommunikationssystem Mittel (8, 9, 10) zum regelmäßigen Verändern der Konfiguration jeder Zelle (11, 12, 13) durch eine Rotation der Sektoren (18, 19, 20), die die Zelle bilden, umfasst.

2. Kommunikationssystem nach Anspruch 1, bei dem die Mittel zum regelmäßigen Verändern der Konfiguration einer Zelle (11) einen Controller (8) umfassen, der einen Ausgang aufweist, der dazu verwendet wird, eine Richtantenne (5) zu steuern, die jedem Sektor zugeordnet ist.

3. Kommunikationssystem nach einem der vorhergehenden Ansprüche, bei dem die Konfiguration jeder Zelle (11, 12, 13) alle N vorbestimmten Zeitperioden verändert wird.

4. Kommunikationssystem nach Anspruch 3, wobei N = 1 und bei dem der Controller (8) dazu eingerichtet ist, zwischen zwei abwechselnden Konfigurationen bei jeder Zeitperiode hin- und herzuschalten.

5. Kommunikationssystem nach einem der Ansprüche 3 oder 4, bei dem die Kommunikationsverbindung in Zeitslots eingeteilt ist und bei dem die vorherbestimmte Zeitperiode einen Zeitslot umfasst.

6. Kommunikationssystem nach einem der vorhergehenden Ansprüche, bei dem der Controller (8) dazu eingerichtet ist, die Zellkonfiguration durch Rotation der Sektoren um 360/2n Grad zu verändern, wobei n die Anzahl an Sektoren pro Zelle ist.

## Revendications

1. Système de communication pour un réseau de communication qui comprend plusieurs stations de base (15, 16, 17), définissant chacune une cellule (11, 12, 13) de couverture de communication, chaque cellule étant configurée par division en plusieurs secteurs (18, 19, 20) pour la communication avec au moins une unité d'abonné mobile sur une liaison de communication associée à chaque secteur (18, 19, 20) et ayant une fréquence porteuse RF (A, B, C) qui lui est attribuée,
**caractérisé en ce que** le système de communication comprend des moyens (8, 9, 10) permettant de changer, périodiquement, la configuration de chaque cellule (11, 12, 13) par rotation des secteurs (18, 19, 20) constituant la cellule.

2. Système de communication selon la revendication 1, dans lequel les moyens pour changer périodiquement la configuration d'une cellule (11) comprennent un contrôleur (8) ayant une sortie qui est utilisée pour orienter une antenne directionnelle (5), associée à chaque secteur.

3. Système de communication selon l'une quelconque des revendications précédentes, dans lequel la configuration de chaque cellule (11, 12, 13) est changée toutes les N périodes temporelles prédéterminées.

4. Système de communication selon la revendication 3, dans lequel N = 1, et le contrôleur (8) est conçu pour commuter en va-et-vient entre deux configurations différentes, à chaque période temporelle.

5. Système de communication selon l'une quelconque des revendications 3 ou 4, dans lequel la liaison de communication est divisée en tranches de temps, et dans lequel ladite période temporelle prédéterminée comprend une tranche de temps.

6. Système de communication selon l'une quelconque des revendications précédentes, dans lequel le contrôleur (8) est conçu pour changer la configuration de la cellule en faisant tourner les secteurs sur 360/2n degrés, où n est le nombre de secteurs par cellule.
